Europäisches Patentamt

European Patent Office

Office européen des brevets

(11) Numéro de publication: **0 298 810 B1**

## FASCICULE DE BREVET EUROPEEN

(45) Date de publication de fascicule du brevet: **16.12.92** (51) Int. Cl.5: **H04L 7/04**

(21) Numéro de dépôt: **88401546.2**

(22) Date de dépôt: **21.06.88**

(54) **Procédé et dispositif pour l'acquisition de bits de synchronisation dans des systèmes de transmission de données.**

(30) Priorité: **30.06.87 FR 8709236**

(43) Date de publication de la demande:
**11.01.89 Bulletin 89/02**

(45) Mention de la délivrance du brevet:
**16.12.92 Bulletin 92/51**

(84) Etats contractants désignés:
**BE DE ES GB GR IT NL**

(56) Documents cités:
**DE-A- 2 345 491**
**GB-A- 1 401 261**
**US-A- 3 648 237**
**US-A- 4 638 497**

**PATENT ABSTRACTS OF JAPAN, vol. 10, no. 82 (E-392)[2139], 2 avril 1986 & JP-A-60 227 542**

**PATENT ABSTRACTS OF JAPAN, vol. 9, no. 118 (E-316)[1841], 23 mai 1985 & JP-A-60 9241**

**PATENT ABSTRACTS OF JAPAN, vol. 6, no. 67 (E-104)[945], 28 avril 1982 & JP-A-57 9147**

**IEEE TRANSACTIONS ON COMMUNICATION**

**TECHNOLOGY, vol. COM-16, no. 1, février 1968, pages 142-148; T.A. HAWKES et al.: "Construction and performance of a PCM frame synchronizer with self-varying threshold"**

(73) Titulaire: **THOMSON-CSF**
**51, Esplanade du Général de Gaulle**
**F-92800 Puteaux(FR)**

(72) Inventeur: **Malter, Rémi**
**THOMSON-CSF SCPI 19, avenue de Messine**
**F-75008 Paris(FR)**

(74) Mandataire: **Lincot, Georges et al**
**THOMSON-CSF SCPI B.P. 329**
**F-92402 COURBEVOIE CEDEX(FR)**

## Description

La présente invention concerne un procédé et un dispositif pour l'acquisition de bits de synchronisation dans des systèmes de transmission de données.

Elle s'applique notamment aux transmissions de données chiffrées par voies radio ou filaire du type par exemple décrit dans la demande de brevet DE 2 345 491 dans lesquelles le flux d'informations binaires transmis est découpé en blocs tramés.

Dans ces transmissions les informations sont acheminées suivant des suites de bits pseudo-aléatoires et les bits fournis par les démodulateurs de réception peuvent représenter une voie ou plusieurs voies multiplexées, le multiplexage des voies s'effectuant généralement de bit à bit.

Suivant un mode réalisation connu et dont on peut trouver une description dans la revue THOMSON-CSF volume 18 n°1 de mars 1986 éditée par l'éditeur Gauthier Villars, la recherche des bits de synchronisation dans une trame multiplexée de messages est effectuée par une reconnaissance dans la suite des bits pseudo-aléatoires, des bits qui ont les propriétés des bits des suites de Fibonacci. Cette recherche permet d'effectuer le démultiplexage et de reconnaître automatiquement le sens direct ou inversé des bits reçus. La synchronisation est trouvée en effectuant des corrélations sur chacune des voies synchronisées du multiplex et pour réduire la probabilité de fausse alarme, c'est-à-dire la probabilité de reconnaître à tort un bit, des corrélations sont effectuées sur un nombre fixe défini d'échantillons.

Cependant, cette recherche ne peut être effectuée efficacement que si le récepteur a la connaissance préalable du format des informations émises et notamment s'il connaît les voies du multiplex qui sont assujetties à cette synchronisation. D'autre part, le procédé ne permet pas d'éliminer totalement les erreurs qui surviennent sur les bits de synchronisation, ce qui rend difficile leur utilisation comme marquant horaire par exemple pour les équipements de chiffre.

Un autre procédé connu permet cependant de pallier en partie ce dernier inconvénient. Suivant ce procédé la suite des bits de la suite pseudo-aléatoire de bits reçus est comparée à une suite pseudo-aléatoire de même génération. Mais, pour une trame de longueur L, la recherche de la synchronisation peut durer le temps de L tests élémentaires effectués sur N trames, N étant déterminé par la profondeur du registre de pseudo-aléas d'émission dans lequel sont générés les bits de synchronisation. D'autre part, ces tests sont malgré tout effectués même en l'absence d'erreur. Chaque test proprement dit a lieu sur les N bits qui suivent les N premiers bits déjà rentrés dans un registre de longueur 2N. Chaque bit reçu est comparé à la somme qui a servi à sa génération dans le chiffreur d'émission. A la fin du test la trame est rejetée si le nombre de différences obtenues est supérieur à un seuil déterminé. Un vote majoritaire est également effectué entre les bits suivants arrivant dans le registre et les sommes provenant des bits du registre pour éliminer les erreurs simples ce qui permet en cas d'erreur d'introduire dans le registre, par rebouclage interne, un certain nombre de bits votés. La synchronisation est dans ces conditions acquise s'il y a eu moins d'un nombre maximal de différences entre les bits reçus et ceux générés par le rebouclage interne du registre.

Cependant, outre le fait qu'avec ce procédé l'acquisition de la synchronisation prend un temps relativement long éventuellement supérieur à L fois la longueur N du registre qui fournit à l'émission les bits pseudo-aléatoires de synchronisation, on obtient un blocage du registre de réception ou encore l'introduction systématique dans ce registre de bits erronés lorsque notamment les tests portent sur des bits régulièrement erronés.

Le but de l'invention est de pallier les inconvénients précités.

A cet effet, l'invention a pour objet, un procédé pour l'acquisition de bits de synchronisation dans des systèmes de transmission de données transmises entre au moins un émetteur et un récepteur, du type dans lequel le flux d'informations échangées entre un émetteur et un récepteur est découpé en blocs tramés appartenant à une ou plusieurs voies, chaque trame synchronisée étant séparée de la trame suivante par au moins un bit de synchronisation caractérisé en ce qu'il consiste au niveau du récepteur, à comparer modulo le nombre de bits contenus dans une trame la valeur de chacun des bits reçus aux valeurs présupposées des bits de synchronisation, à totaliser les résultats des comparaisons effectuées sur chaque bit et à repérer dans les bits reçus les positions de bit modulo le nombre de bits contenus dans une trame pour lesquelles les totaux obtenus sont supérieurs à une valeur de seuil ajustable, modulo le nombre de bits contenus dans une trame, en fonction du nombre de comparaisons déjà effectuées pour chaque bit d'une trame et adaptée en fonction des probabilités de fausses alarmes et de non détection qui caractérisent la transmission.

Elle a également pour objet un dispositif pour la mise en oeuvre du procédé précité.

Le procédé et le dispositif selon l'invention ont pour principal avantage qu'ils permettent, en un temps rapide, de déterminer la position d'un bit de synchronisation trame et par suite celle de chacun des bits de la trame, de reconnaître la présence d'une inversion de bit reçu et d'effectuer une correction totale d'erreur sur les bits de synchronisation. Du fait que cette correction peut être totale, il est alors possible, avec le procédé de l'invention, d'utiliser les bits de synchronisation à la transmission de certains messages particuliers en introduisant au moment de l'émission des erreurs volontaires pour donner à l'ensemble des bits de synchronisation transmis des configurations particulières correspondant à certains types de messages que l'utilisateur veut transmettre.

D'autres caractéristiques et avantages de l'invention apparaîtront ci-après à l'aide de la description qui va suivre faite en regard des dessins annexés qui représentent :

- La figure 1 le format d'une trame élémentaire ;
- La figure 2 un exemple de trames multiplexées juxtaposées ;
- La figure 3 un exemple de mise en oeuvre du procédé selon l'invention ;
- La figure 4 une extension du procédé selon l'invention à la réalisation d'un dispositif comportant k voies multiplexées ;
- Les figures 5A, 5B et 5C une représentation des trames multiplexées ;
- La figure 6 un dispositif pour la détermination des valeurs de bits attendus ;
- Les figures 7 et 8 des variantes de réalisation du dispositif de la figure 6.
- La figure 9 un dispositif permettant de reconnaître la présence d'inversions dans les bits de synchronisation reçus.

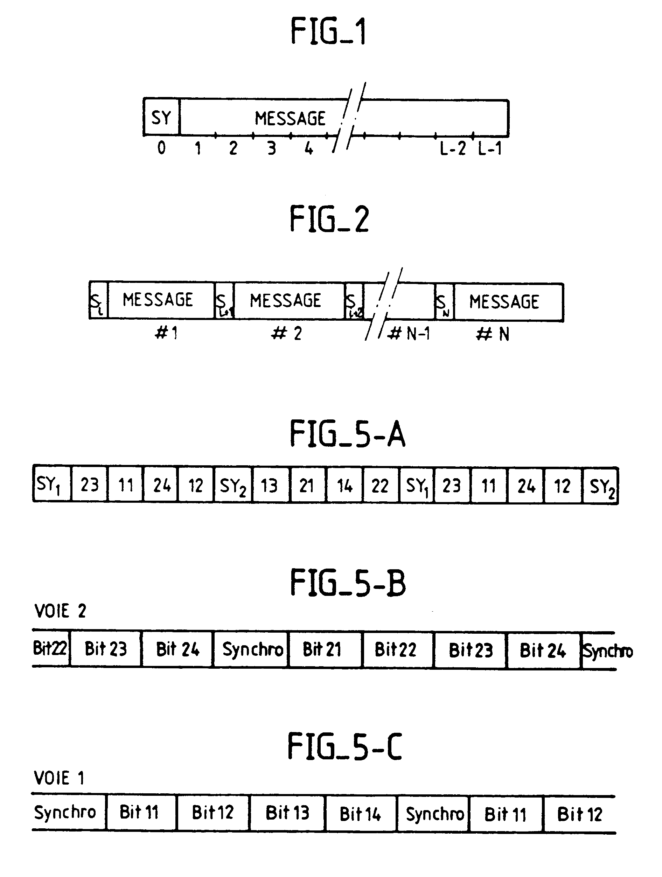

Le procédé selon l'invention qui est décrit ci-après consiste à rechercher les bits de synchronisation dans des trames de messages transmises sur plusieurs voies d'un multiplex, à éliminer les erreurs sur les bits de synchronisation trouvés et à assurer le suivi de la synchronisation sur les différentes voies du multiplex. Chaque trame élémentaire d'un message a un format du type de celui qui est représenté à la figure 1 et les trames juxtaposées transmises entre l'émetteur et les récepteurs ont la configuration représentée à la figure 2. Sur ces deux figures les symboles $S_i$ , $S_{i+1}$, $S_{i+2}$, désignent les positions des bits de synchronisation et ils sont suivis pour chacune des trames par les bits du message transmis. On suppose dans la suite de la description que chacune des trames a une longueur déterminée L.

La recherche des bits de synchronisation a lieu en effectuant une corrélation entre la valeur de chaque bit reçu et sa valeur supposée attendue calculée de façon connue à l'aide du polynôme générateur qui à l'émission a permis la génération des bits pseudo-aléatoires de synchronisation. Ces corrélations consistent à totaliser sur un nombre déterminé de trames successives, le nombre de fois que chaque bit d'une trame et ses homologues occupant la même position dans les trames précédentes ont la même valeur que la valeur du bit de synchronisation attendue. Les totaux ainsi obtenus pour chaque position de bit sont comparés à une valeur de seuil déterminée et la position du bit à laquelle correspond le premier total supérieur à la valeur de seuil déterminée est considérée comme correspondant à la position du bit de synchronisation.

Selon l'invention lorsque le multiplex est réduit à une seule voie, une première valeur de seuil $S_1$ est déterminée en fonction d'un nombre minimal $N_1$ de corrélations compatibles avec les probabilités de fausse alarme $P_{FA}$ et de non détection $P_{ND}$ qui caractérisent la transmission. Comme la probabilité de reconnaître un bit dans une trame quelconque est égale à 1/2, la probabilité de reconnaître n fois ce même bit dans $N_1$ trames successives est

$$C_{N_1}^n \cdot (\frac{1}{2})^n \cdot (\frac{1}{2})^{N-m} = C_{N_1}^n \cdot \frac{1}{2^N}$$

$$\text{avec} \quad C_{N_1}^n = \frac{N_1!}{n!(N_1-n)!}$$

Dans ce cas, en fixant par un seuil $S_1$ le nombre de fois qu'il est possible de reconnaître à tort un bit de synchronisation sur N trames transmises, la probabilité d'obtenir une valeur de n supérieure au seuil $S_1$ est égale à

3

$$\sum_{n=S_1}^{n=N} C_{N_1}^{n} \cdot \frac{1}{2^{N_1}}$$

Inversement les relations précédentes permettent pour une probabilité de fausse alarme fixée de déterminer le seuil S de décision en fonction du nombre N de trames analysées.

De façon à peu près similaire, le seuil $S_1$ peut être fixé en évaluant la probabilité de non détection $P_{ND}$ ou encore la probabilité qu'a le récepteur de ne pas reconnaître le bit de synchronisation attendu. Ceci correspond par exemple, au cas où le signal reçu a des caractéristiques tout à fait exploitables mais dont la valeur détectée ne correspond pas à la valeur du bit transmis à cause du bruit qui entache la transmission. Dans ce cas, si $P_e$ est la probabilité qu'a le récepteur de se tromper sur la valeur d'un bit, la probabilité de reconnaître n fois le bit reçu sur N trames transmises est défini par la relation

$$C_{N_1}^{n} \cdot (1-P_e)^n \cdot P_e^{N-n}$$

La probabilité $P_{ND}$ de non détection est alors égale à :

$$\sum_{n=0}^{S_1-1} C_{N_1}^{n} \cdot (1-P_e)^n \cdot P_e^{N_1-n}$$

pour n inférieur au seuil $S_1$ de décision fixé. Inversement, la formule précédente permet pour une probabilité de non détection $P_{ND}$ fixée de déterminer un seuil $S_1$ de décision en fonction du nombre N de trames analysées. Lors de la corrélation élémentaire suivante, le récepteur aura effectué $N_2 = N_1 + 1$ corrélations, et comme précédemment le nombre total d'occurrence avec la valeur de bit de synchronisation souhaitée pourra être comparée à un nouveau seuil $S_2$ compatible avec les mêmes probabilités de fausse alarme $P_{FA}$ et de non détection $P_{ND}$.

Le processus précédent peut ainsi se répéter pour chaque trame suivante jusqu'à une valeur $N_{max}$ où il pourra être garanti, si aucun totalisateur n'a dépassé la valeur de seuil de décision que les trames analysées ne sont pas synchronisées. Le procédé permet ainsi d'obtenir à probabilités de fausse alarme $P_{FA}$ et de non détection $P_{ND}$ données, un temps de traitement s'adaptant automatiquement aux erreurs de la transmission.

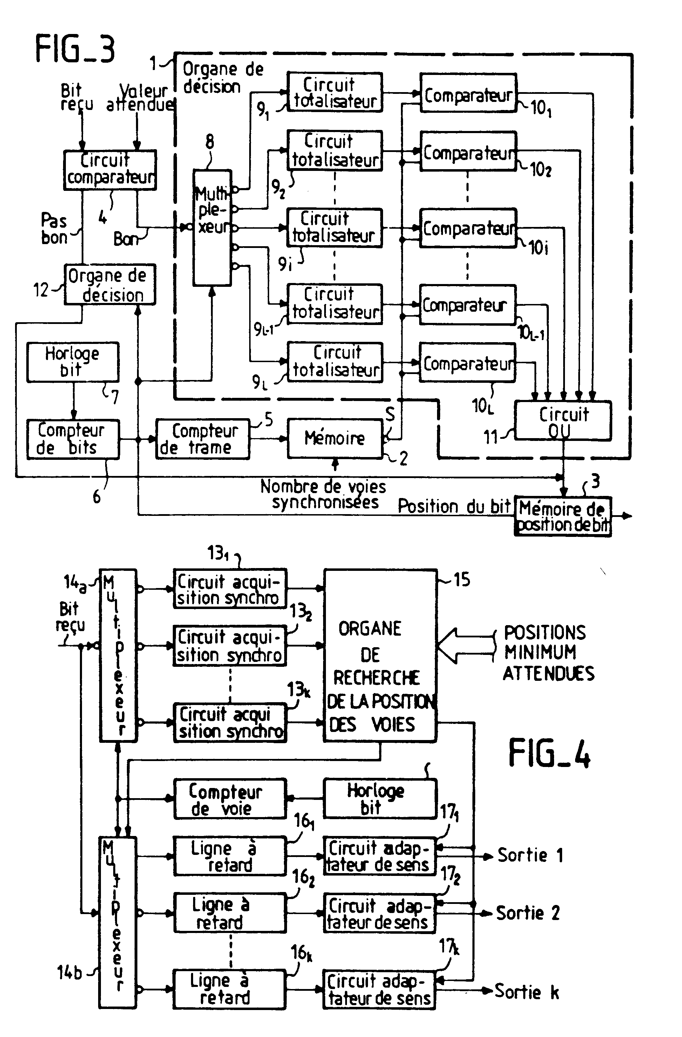

Un exemple de dispositif pour la mise en oeuvre du procédé selon l'invention est montré à la figure 3. Ce dispositif comprend un premier organe de décision 1 représenté à l'intérieur d'une ligne en pointillés, couplé à une mémoire de seuil de décision 2 et à une mémoire 3 de position de bit. Il comprend également un circuit comparateur 4 pour comparer l'état de chaque bit reçu d'une trame à la valeur attendue du bit de synchronisation, un compteur de trames pour adresser la mémoire 2 en fonction du nombre de trames analysées, et un compteur de bits 6 actionné par un circuit d'horloge bit 7. L'organe de décision 1 comprend un circuit multiplexeur 8 à L sorties couplées respectivement à un circuit totalisateur d'un ensemble de circuits totalisateurs référencés respectivement de $9_1$ à $9_L$. Le circuit multiplexeur 8 est couplé par son entrée à une première sortie du circuit comparateur 4. Les contenus des totalisateurs $9_1$ à $9_L$ sont appliqués respectivement sur une première entrée de circuits comparateurs $10_1$ à $10_L$. La deuxième entrée des circuits comparateurs $10_1$ à $10_L$ est couplée sur la sortie de données de la mémoire 2 pour recevoir les valeurs de seuil de décision. Les sorties des circuits comparateurs $10_1$ à $10_L$ sont reliées respectivement aux entrées d'un circuit OU logique 11 dont la sortie est reliée à une entrée de validation de la mémoire 3 de position de bit. Le dispositif comprend également un deuxième organe de décision 12 identique au premier organe de décision 1 qui est couplé à une deuxième sortie complémentée du circuit comparateur 4.

Comme indiqué précédemment le circuit comparateur 4 compare la valeur de chacun des bits reçus à la valeur attendue d'un bit de synchronisation correspondant. Le résultat de la comparaison est dirigé vers un circuit totalisateur 9 au rythme de l'horloge bit par le multiplexeur 8 sous la commande du compteur de

4

bits 6. Le contenu de chaque circuit totalisateur peut ainsi être augmenté d'une unité chaque fois que le circuit totalisateur est couplé à la sortie du circuit comparateur 4 et que le bit reçu correspond à la valeur attendue. Lorsque le contenu d'un circuit totalisateur 9 atteint la valeur de seuil prédéterminée qui est lue dans la mémoire 2, le circuit comparateur correspondant qui est couplé à sa sortie transmet par l'intermédiaire du circuit OU logique 11 un signal de validation de la mémoire de position de bit 3 ce qui permet de mémoriser l'adresse du bit fournie par le compteur de trames 5 dans la mémoire 3.

L'exemple qui vient d'être décrit pour une voie peut être étendu à une réalisation permettant d'exploiter k voies de la façon représentée à la figure 4. Dans cet exemple k circuits référencés respectivement de $13_1$ à $13_k$ et identiques au circuit de la figure 3 reçoivent les bits à comparer au travers d'un circuit multiplexeur $14_a$. Les positions de bits qu'ils détectent sont transmises à un organe de recherche de position de voies 15. L'organe de recherche de voies 15 compare les positions détectées par chacun des dispositifs $13_1$ à $13_k$ à une position de voie minimum attendue. Les bits reçus sont alors aiguillés au travers d'un multiplexeur $14_b$ vers les voies de l'appareil de réception au travers des lignes à retard $16_1$ à $16_k$ et de circuits adaptateurs de sens $17_1$ à $17_k$. Les multiplexeurs $14_a$ et $14_b$ sont commandés à partir d'un compteur de voies $14_c$ piloté par le circuit 7 d'horloge bit.

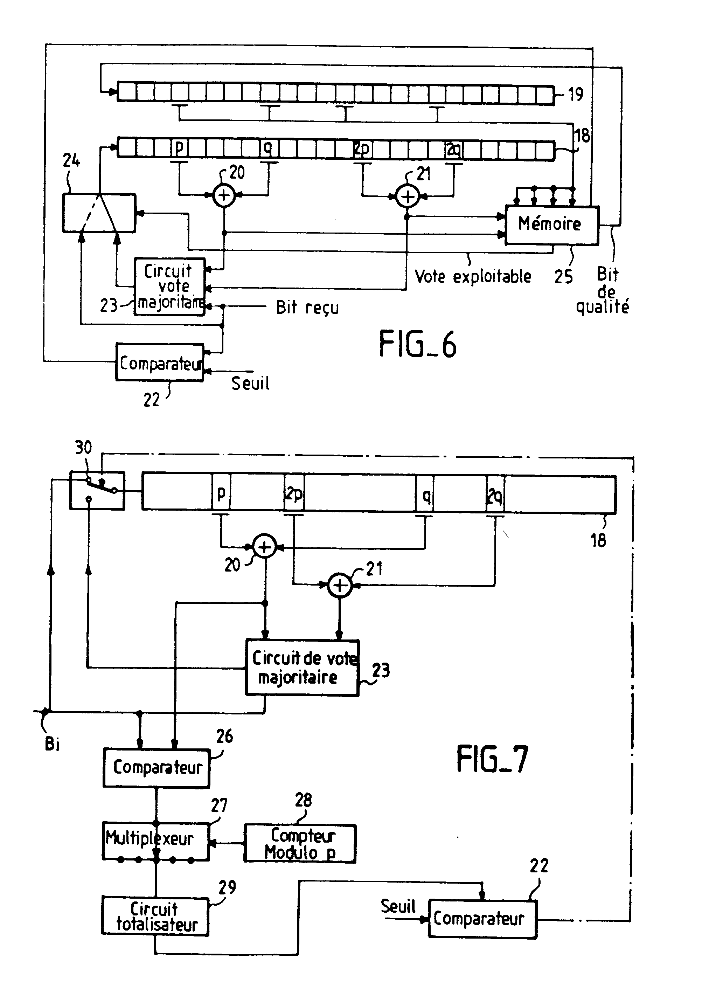

Cependant au niveau de la trame du multiplex, du type de celle qui est représentée aux figures 5A, 5B et 5C et lorsque plusieurs voies sont synchronisées, l'existence d'une probabilité de fausse alarme $P_{FA}$ et de non détection $P_{ND}$ sur chacune des voies conduit à une probabilité de fausse alarme $P_T = (P_{FA})^{NBV}$ au niveau de la trame. NBV désignant dans la formule le nombre de voies synchronisées.

Afin de conserver cette valeur constante, le procédé selon l'invention consiste à augmenter la probabilité de fausse alarme exigée au niveau d'une voie dès la découverte d'une autre voie synchronisée. Les valeurs de seuil fournies par la mémoire 2 sont alors ajustées en fonction directement du nombre de voies synchronisées. Cela permet de réduire le nombre de corrélations à effectuer et donc la durée de la phase de recherche de la synchronisation trame, lorsque, le taux d'erreur est faible et de s'adapter à celui-ci afin de pourvoir à des probabilités de fausses alarmes $P_{FA}$ et de non détection $P_{ND}$ constantes.

Dans l'exemple des figures 3 et 4, la valeur attendue du bit résulte d'un vote majoritaire entre le bit reçu et certains bits déjà reçus mémorisés dans un registre à décalage défini par le polynôme générateur qui a permis leur émission au niveau de l'émetteur.

Si par exemple le polynôme générateur d'émission est de la forme :

$1 + x^p + x^q$, et si $B_i$ désigne le bit de rang i reçu entrant dans le registre on a entre les bits de rang i + p et i + q, la relation :

$B_i = B_{i+p} \oplus B_{i+q}$ , le symbole $\oplus$ représentant l'opérateur "OU exclusif",

ou encore la relation

$$B_i = B_{i+2p} \oplus B_{i+2q}$$

puisque :

$$B_{i+p} = B_{i+2p} \oplus B_{i+p+q}$$

et

$$B_{i+q} = B_{i+p+q} \oplus B_{i+2q}.$$

Le vote majoritaire peut alors être effectué entre le bit reçu, le résultat de $B_{i+p} \oplus B_{i+q}$ et le résultat de $B_{i+2p} \oplus B_{i+2q}$. En effectuant ces traitements on peut ainsi éliminer une erreur simple sur le bit reçu lorsque la valeur de ce bit ne coïncide pas avec la valeur obtenue d'un vote majoritaire entre le bit reçu et les résultats partiels des opérations $B_{i+p} \oplus B_{i+q}$ et $B_{i+2p} \oplus B_{i+2q}$ .

Dans ce cas, c'est la valeur du vote majoritaire qui est injectée dans le registre à la place du bit reçu.

Cependant, pour éviter lors de certaines configurations l'injection systématique de bits erronés dans le registre, le procédé selon l'invention consiste à effectuer un vote majoritaire muni d'une notion de qualité. Un dispositif correspondant est représenté à la figure 6. Il comprend un registre de réception 18 doublé d'un registre de qualité 19 qui associe à chaque bit reçu un bit de qualité. Il comprend également des circuits "OU exclusif" 20 et 21, le circuit 20 effectuant le "OU exclusif" entre les bits de positions p et q dans le registre 18 et le circuit "OU exclusif" 21 effectuant le "OU exclusif" entre les positions de bits 2p et 2q dans le registre 18. Les circuits "OU exclusif" 20 et 21 effectuent ainsi un rebouclage du registre 18 suivant une loi qui est conforme à la loi polynomiale qui a servi à la génération des bits pseudo-aléatoires à l'émission. Le circuit comparateur 22 compare le niveau du bit reçu à un seuil de bruit prédéterminé. Passé

5

ce seuil, le bit reçu est déclaré bon ou de bonne qualité. Le bit reçu est appliqué en même temps que les valeurs de bits sortant des circuits "OU exclusif" 20 et 21 à l'entrée d'un circuit de vote majoritaire 23 qui effectue un vote majoritaire sur ces bits, le résultat du vote étant appliqué sur une première entrée d'un aiguilleur 24. La deuxième entrée de l'aiguilleur 24 reçoit les bits reçus. L'aiguilleur 24 est commandé par la sortie d'une mémoire 25 dont les entrées d'adressage sont reliées respectivement aux positions de bits p, q, 2p et 2q correspondantes du registre de qualité 19, ainsi qu'à la sortie du circuit comparateur 22.

La mémoire 25 contient une table qui permet de définir la fiabilité de chacun des éléments du vote et d'apprécier si le vote effectué par le circuit 23 est exploitable ou non (qualité et concordance des éléments du vote) et de définir la qualité du résultat pour l'injection d'un bit de qualité dans le registre 19. Si le vote est exploitable la mémoire 25 positionne l'entrée du registre 18 sur la sortie du circuit de vote majoritaire 23 et le résultat du vote est introduit dans le registre 18. Par contre, si le vote n'est pas exploitable la mémoire 25 commande l'aiguilleur 24 pour introduire directement le bit reçu à l'entrée du registre à décalage 18, et la qualité de ce bit dans le registre 19.

Selon une autre variante d'exécution du dispositif représenté à la figure 6, il est possible plutôt que de comparer l'énergie de chaque bit reçu à un seuil déterminant si le bit est fiable ou non, d'estimer le facteur de forme de l'onde reçue. Ceci peut être obtenu très facilement si celle-ci provient d'un démodulateur par exemple, en corrélant la forme du bit reçu avec une forme attendue pour en déduire une qualité donnant le taux de confiance dans la valeur de ce bit.

Cependant, lorsqu'aucun critère ne peut être utilisé pour estimer cette qualité, une autre façon de procéder peut consister à choisir une valeur moyenne des bits reçus pour chaque position de trame du message. Dans ce cas, le dispositif de la figure 6 est modifié de la façon représentée à la figure 7 où le registre de qualité 19 est remplacé par un dispositif comprenant un circuit comparateur 26, un circuit multiplexeur 27, un compteur 28 modulo p, et un circuit totalisateur 29. Dans ce cas, le bit reçu $B_i$ est comparé au résultat du "OU exclusif" $B_{i+p} \oplus B_{i+q}$ obtenu du circuit "OU exclusif" 20, au moyen du circuit comparateur 26 et le résultat de la comparaison est appliqué à un circuit totalisateur 29 au travers un multiplexeur 27 commandé par le compteur 28 modulo p. Le résultat de la comparaison effectuée par le comparateur 26 est ainsi accumulé dans le circuit totalisateur 29 à chaque cycle modulo p effectué par le compteur 28. Le contenu du circuit totalisateur 29 est comparé par le circuit comparateur 29 à un seuil déterminé et si le résultat de la comparaison est inférieur au seuil déterminé, le bit reçu est considéré non fiable. C'est alors le résultat du vote majoritaire effectué par le circuit de vote 23 qui est appliqué à la place du bit $B_i$ à l'entrée du registre 18 par un circuit aiguilleur 30. Dans le cas contraire, si le résultat de la comparaison est positif le bit reçu est directement appliqué par le circuit aiguilleur 30 à l'entrée du registre 18.

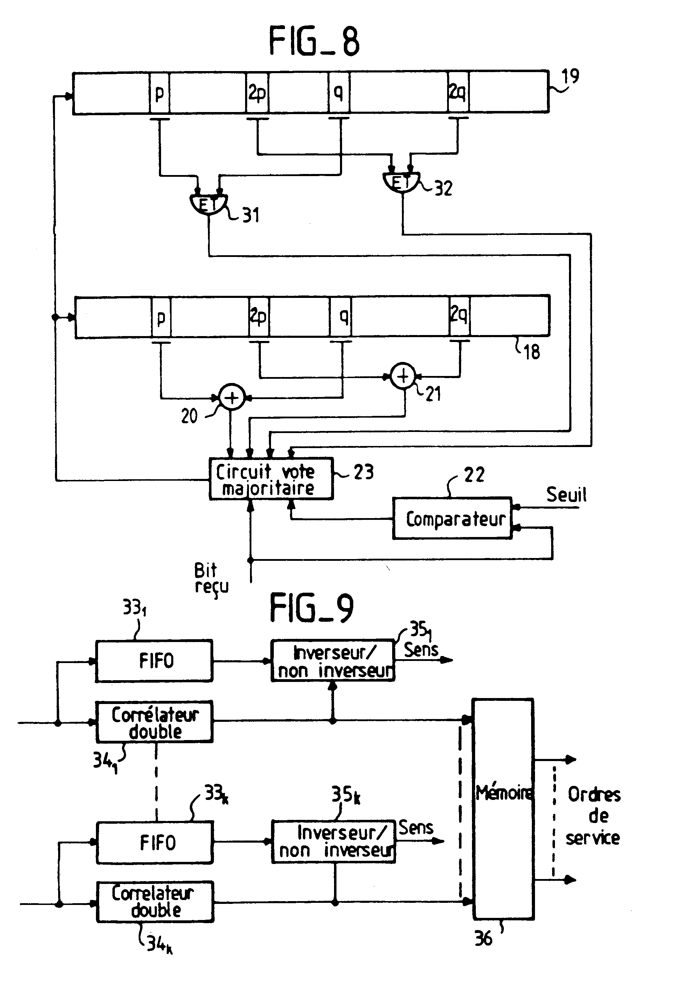

Une autre variante d'exécution qui est représentée à la figure 8 consiste à munir la somme des bits effectuée par les circuits OU exclusif 20 et 21 d'une qualité. Ceci est obtenu sur la figure 8 par des circuits ET 31 et 32 qui effectuent des opérations ET logique respectivement sur les positions de bit p et q d'une part, et 2p, 2q d'autre part, du registre de qualité 19. Ce sont alors les résultats des opérations "OU exclusif" effectuées par les circuits 20, 21, et des opérations "OU logique" effectuées par les circuits 31 et 32 qui sont appliqués, en même temps que le bit reçu et le résultat de la comparaison effectuée par le comparateur 22, sur des entrées correspondantes du circuit de vote majoritaire 23. Le résultat du vote majoritaire est appliqué alors directement d'une part, sur l'entrée du registre 18 et d'autre part sur l'entrée du registre 19.

L'obtention de bits totalement corrigés à l'intérieur du registre 18 permet l'utilisation de la comparaison avec les bits reçus à des fins d'indication pour les dispositifs d'exploitation extérieurs non représentés, ainsi que leur usage comme voie de transmission supplémentaire. Il permet également d'assurer le suivi de synchronisation en cas de disparition du signal, tout en restant apte à suivre l'évolution des modifications de l'émission. Pour cela différentes corrélations et temporisations permettent d'obtenir un séquencement sans risque des différentes fonctions de suivi. Dans le registre 18 il est toujours possible de comparer en permanence le résultat du rebouclage avec le bit reçu. Si le registre contient au moins une erreur il y a automatiquement divergence entre les suites générées localement et la suite reçue. Un choix judicieux de polynôme irréductible de degré N permettra d'obtenir une faible autocorrélation entre les deux suites décalées de longueur $2^{N-1}$. Le maintien du nombre d'occurrences au-dessus d'un certain seuil permet de garantir que le registre ne contient aucune erreur. Il est ainsi possible de générer une suite de bits de synchronisation où toutes les erreurs ont été éliminées. Le comptage des différences entre les bits reçus et ceux générés localement (taux de corrélation) permet de connaître le taux d'erreur sur la réception de ces bits. Comme les erreurs de transmission interviennent de façon identique sur les bits de synchronisation et sur les bits de données l'estimation du taux d'erreur sur les bits de synchronisation est directement le reflet du taux d'erreur de transmission et celle-ci peut être avantageusement communiquée à des dispositifs extérieur de gestion ou d'exploitation de la communication.

Dans le cas d'application où plusieurs voies sont multiplexées et où quelques unes seulement sont synchronisées les dispositifs décrits précédemment permettent de continuer une synchronisation locale du dispositif de réception en cas de perte de la synchronisation dans le cas par exemple où celle-ci s'effectue sur toutes les voies synchronisées. L'intérêt est que, en entretenant localement la synchronisation au niveau du récepteur, celui-ci peut à tout moment lorsque la cause qui a provoqué la perte de synchronisation disparaît retrouver celle-ci. Ceci permet aux équipements de chiffre de reprendre le traitement des messages directement sans avoir à rechercher les bits de synchronisation de chacune des voies multiplexées. Par contre, la perte de synchronisation sur quelques voies seulement alors qu'il reste au moins une voie dont le taux de corrélation dépasse un seuil déterminé permet d'affirmer que le phénomène se situe en amont du multiplexeur et qu'il consiste simplement en une modification de la séquence des bits pseudo-aléatoires émis, il sera alors possible d'effectuer une recherche de cette nouvelle séquence sur les voies qui ne reçoivent plus les bits de synchronisation, les autres voies continuant à fonctionner avec les bits de synchro trame sur lesquelles elles se sont précédemment calées.

Pour effectuer la distinction entre une perte de synchronisation totale ou partielle un procédé pourra consister à générer localement les bits de synchronisation dès que la perte de synchronisation d'une voie a été constatée sur cette voie en amorçant une temporisation. Si la perte de synchronisation est totale sur toutes les voies, la synchronisation de chacune des voies continuera à être générée localement en mettant à zéro la temporisation et en réamorçant celle-ci dès l'apparition de la synchronisation sur une voie. A la fin de la temporisation on pourra ainsi être sûr que certaines voies ne sont plus synchronisées alors que d'autres n'ont pas subi de modifications ce qui permettra alors de réactualiser le registre des premières voies afin de lancer le processus de convergence vers la nouvelle suite.

Selon une autre variante de réalisation de l'invention qui est représentée à la figure 9, il est encore possible d'utiliser des registres à décalage $33_1$ ... $33_k$ organisés en piles du type FIFO par exemple qui est l'abréviation anglo-saxonne de "First In First Out" pour effectuer un retard fixe sur chacune des voies. Cela permet de déterminer la présence d'une inversion dans une transmission à l'aide par exemple d'un corrélateur double $34_1$ ... $34_k$ sur chacune des voies, travaillant dans le court terme, l'un sur les bits reçus l'autre sur les bits reçus inversés. Ce perfectionnement permet de détecter des phénomènes inhérents à la transmission, du type MSK par exemple ou encore de détecter un changement de réseau ou la présence d'une modulation volontaire à très bas débit à des fins de télésignalisation d'ordres sur voies de service par exemple. Cette inversion peut être corrigée sans perte de bits si la durée de la corrélation est identique au retard apporté par le registre à décalage pour inversion des bits contenus dans la pile au moyen d'amplificateurs inverseurs $35_1$ à $35_k$. Si cette inversion se produit sur toutes les voies synchronisées et que l'on a interdit cette configuration de modulation, on pourra alors supposer qu'elle est globale et on pourra inverser également les voies non synchronisées. Par contre si elle ne se produit que sur quelques unes d'entre elles cette inversion pourra être interprétée comme un symbole qui est émis sur voie d'ordre. Ce symbole pourra alors être décodé par une table contenue dans une mémoire 36 adressée en fonction des sens direct ou inversés fournis par les corrélateurs $34_1$ à $34_k$ .

De la même manière dans le cas d'une transmission à très faible taux d'erreur, l'émission volontaire d'erreur sur ces bits de synchronisation peut servir de voie supplémentaire à très bas débit. Ces erreurs devront avoir une redondance suffisante pour être reconnues mais on pourra alors veiller à ce qu'elles n'induisent pas de configuration de blocage du registre lorsque par exemple certaines configurations d'erreurs doubles apparaissent, afin de ne pas retarder la recherche de synchronisation et la convergence.

Naturellement, les modes de réalisation qui viennent d'être décrits ne sont pas les seuls qui puissent permettre la bonne exécution de l'invention.

A titre d'exemple, on pourra très bien envisagé d'effectuer les différents traitements décrits précédemment à l'aide d'une architecture à microprocesseur convenablement programmée.

**Revendications**

1. Procédé pour l'acquisition de bits de synchronisation dans des systèmes de transmission de données transmises entre au moins un émetteur et un récepteur, du type dans lequel le flux d'informations échangées entre un émetteur et un récepteur est découpé en blocs tramés appartenant à une ou plusieurs voies, chaque trame synchronisée étant séparée de la trame suivante par au moins un bit de synchronisation caractérisé en ce qu'il consiste au niveau du récepteur, à comparer (4) modulo le nombre de bits contenus dans une trame la valeur de chacun des bits reçus aux valeurs présupposées des bits de synchronisation, à totaliser ($9_1$ ... $9_L$) les résultats des comparaisons effectuées sur chaque bit et à repérer (3) dans les bits reçus les positions de bit modulo le nombre de bits contenus dans une

EP 0 298 810 B1

trame pour lesquelles les totaux obtenus sont supérieurs à une valeur de seuil (S) ajustable, modulo le nombre de bits contenus dans une trame, en fonction du nombre de comparaisons déjà effectuées pour chaque bit d'une trame et adaptée en fonction des probabilités de fausses alarmes et de non détection qui caractérisent la transmission.

2. Procédé selon la revendication 1 caractérisé en ce que les positions des bits repérées dans la suite des bits reçus sont mémorisées (3), pour déterminer d'après leur adresse relative (5,6) l'ordre des voies synchronisées.

3. Procédé selon les revendications 1 et 2 caractérisé en ce que les totalisations sont effectuées jusqu'à un nombre maximal correspondant à un nombre $N_{max}$ de trame au delà duquel il peut être garanti, si aucune totalisation n'a dépassé la valeur de seuil, que les trames analysées ne sont pas synchronisées.

4. Procédé selon l'une quelconque des revendications 1 à 3 caractérisé en ce que les valeurs présupposées des bits de synchronisation peuvent avoir l'une des deux valeurs binaires "un" ou "zéro", et que les totalisations sont effectuées simultanément sur la réalisation d'un événement (bit 1) et de son contraire (bit à zéro) pour reconnaître la présence d'inversions dans les bits de synchronisation.

5. Procédé selon l'une quelconque des revendications 1 à 4 caractérisé en ce que les bits de synchronisation sont générés à l'émission suivant une suite de bits pseudo-aléatoires.

6. Procédé selon l'une quelconque des revendications 1 à 5 caractérisé en ce qu'il consiste pour obtenir la valeur présupposée d'un bit de synchronisation, à multiplier les bits de synchronisation déjà reçus par le polynôme générateur qui a servi à leur génération à l'émission.

7. Procédé selon l'une quelconque des revendications 1 à 6 caractérisé en ce qu'il consiste à corriger les erreurs sur les bits de synchronisation reçus en affectant à chaque bit de synchronisation reçu un bit reflétant sa qualité (19, 23, 25) et en calculant (20, 21, 23, 31, 32) la valeur attendue de chaque bit de synchronisation par un vote majoritaire pondéré par la qualité des bits reçus.

8. Procédé selon l'une quelconque des revendications 1 à 7 caractérisé en ce qu'il consiste à provoquer des modifications dans la suite des bits de synchronisation pour transmettre des messages supplémentaires.

9. Procédé selon l'une quelconque des revendications 1 à 8 caractérisé en ce qu'il consiste à déterminer le taux d'erreur de la transmission en mesurant celui des bits de synchronisation.

10. Procédé selon l'une quelconque des revendications 1 à 9 caractérisé en ce qu'il consiste à décider à tout instant par des corrélations sur les bits reçus de l'entretien de la synchronisation sans la modifier, ou sa modification sur la partie seulement qui est modifiée à l'émission.

11. Dispositif pour l'acquisition de bits de synchronisation dans des systèmes de transmission de données transmises entre au moins un émetteur et un récepteur pour la mise en oeuvre du procédé selon l'une quelconque des revendications 1 à 10, caractérisé en ce qu'il comprend dans le récepteur :
    - un premier et un deuxième organes de décision (1) couplés à une mémoire de seuil décision (2) et à une mémoire (3) de position de bit,
    - un circuit premier comparateur (4) pour comparer l'état de chaque bit reçu d'une trame à la valeur attendue du bit de synchronisation,
    - un compteur de trame (5) pour adresser la mémoire de seuil de décision (2) en fonction du nombre de trames analysées,
    - ainsi qu'un compteur de bits (6).

12. Dispositif selon la revendication 11, caractérisé en ce que le premier et le deuxième organes de décision (1) comprend :
    - un circuit multiplexeur (8) à L sorties couplées respectivement à un circuit totalisateur ($9_1$ ... $9_L$) et par une entrée à une première sortie du circuit premier comparateur (4) pour comparer l'état de chaque bit reçu d'une trame, les sorties de chaque circuit totalisateur ($9_1$ ... $9_L$) étant reliées respectivement à une première entrée de deuxièmes circuits comparateurs $10_1$ à $10_L$ dont les

8

EP 0 298 810 B1

deuxièmes entrées sont reliées à une sortie de donnée de la mémoire de seuil de décision (2),
- un circuit "OU" logique (11) relié par ses entrées respectivement aux sorties des deuxièmes circuits comparateurs et par sa sortie à une entrée de validation de la mémoire de position de bit (3).

**13.** Dispositif selon la revendication 11, caractérisé en ce que les premier et deuxième organes de décision ainsi que le compteur de trames (5) et le compteur de bits (6) sont formés par les circuits d'un microprocesseur.

**14.** Dispositif selon l'une quelconque des revendications 11 à 13, caractérisé en ce que le récepteur est un récepteur d'ondes radioélectrique.

**Claims**

**1.** A method for the acquisition of synchronisation bits in systems for transmission of data transmitted between at least one transmitter and a receiver, of the type in which the flow of information exchanged between a transmitter and a receiver is cut into screened blocks belonging to one or more paths, each synchronised screen being separated from the following screen by at least one synchronisation bit, characterised in that it consists, at the level of the receiver, in comparing (4) modulo the number of bits contained in a screen , the value of each of the bits received with the presupposed values of the synchronisation bits, in totalling ($9_1$ ... $9_L$) the results of the comparisons carried out on each bit and in marking (3) in the bits received the bit positions modulo the number of bits contained in a screen for which the totals obtained are greater than an adjustable threshold value (S), modulo the number of bits contained in a screen, as a function of the number of comparisons already carried out for each bit of a screen and adapted as a function of the probabilities of false alarms and of non-detection which characterise the transmission.

**2.** A method according to Claim 1, characterised in that the positions of bits marked in the series of bits received are stored (3), to determine from their relative address (5,6) the order of synchronised paths.

**3.** A method according to Claims 1 and 2, characterised in that the additions are carried out up to a maximum number corresponding to a screen number $N_{max}$ beyond which it can be guaranteed, if no totalling has exceeded the threshold value, that the analysed screens are not synchronised.

**4.** A method according to any one of Claims 1 to 3, characterised in that the presupposed values of synchronisation bits may have one of the two binary values "one" or "zero", and that the additions are carried out simultaneously on the realisation of an event (bit 1) and of its opposite (zero bit) to recognise the presence of inversions in the synchronisation bits.

**5.** A method according to any one of Claims 1 to 4, characterised in that the synchronisation bits are generated on the transmission following a series of pseudo-random bits.

**6.** A method according to any one of Claims 1 to 5, characterised in that it consists in obtaining the presupposed value of a synchronisation bit, in multiplying the synchronisation bits already received by the generating polynomial which has served for their generation on transmission.

**7.** A method according to any one of Claims 1 to 6, characterised in that it consists in correcting the errors on the synchronisation bits received by assigning to each synchronisation bit received a bit reflecting its quality (19, 23, 25) and by calculating (20, 21, 23, 31, 32) the expected value of each synchronisation bit by a majority vote balanced by the quality of the bits received.

**8.** A method according to any one of Claims 1 to 7, characterised in that it consists in bringing about modifications in the series of synchronisation bits to transmit supplementary messages.

**9.** A method according to any one of Claims 1 to 8, characterised in that it consists in determining the rate of error of transmission by measuring that of the synchronisation bits.

**10.** A method according to any one of Claims 1 to 9, characterised in that it consists in deciding at any

9

instant by correlations on the bits received to maintain the synchronisation without modifying it, or to modify it only on the part which is modified on transmission.

**11.** A method for the acquisition of synchronisation bits in data transmission systems transmitted between at least one transmitter and one receiver for implementing the method according to any one of Claims 1 to 10, characterised in that it comprises in the receiver:
- a first and a second decision element (1) coupled to a decision threshold memory (2) and a bit position memory (3),
- a first comparator circuit (4) to compare the status of each bit received of a screen with the expected value of the synchronisation bit,
- a screen counter (5) to address the decision threshold memory (2) as a function of the number of screens analysed,
- and also a bit counter (6).

**12.** A device according to Claim 11, characterised in that the first and the second decision elements (1) comprise:
- a multiplexer circuit (8) of L outputs coupled respectively to an adding circuit ($9_1$ ... $9_L$) and by an input to a first output of the first comparator circuit (4) to compare the status of each received bit of a screen, the outputs of each adding circuit ($9_1$ ... $9_L$) being connected respectively to a first input of second comparator circuits $10_1$ to $10_L$, the second inputs of which are connected to a data output of the decision threshold memory (2),
- a logic "OR" circuit (11) connected by its inputs respectively to the outputs of the second comparator circuits and by its output to a validation input of the bit position memory (3).

**13.** A device according to Claim 11, characterised in that the first and second decision elements and also the screen counter (5) and the bit counter (6) are formed by the circuits of a microprocessor.

**14.** A device according to any one of Claims 11 to 13, characterised in that the receiver is a radioelectrical wave receiver.

**Patentansprüche**

**1.** Verfahren zur Akquisition von Synchronisationsbits in Systemen zur Übertragung von Daten, die zwischen mindestens einem Sender und einem Empfänger übertragen werden, wobei der zwischen dem Sender und dem Empfänger ausgetauschte Informationsfluß in Rahmenblocks aufgeteilt ist, die einem oder mehreren Kanälen angehören und wobei jeder synchronisierte Rahmen vom nächstfolgenden Rahmen durch mindestens ein Synchronisationsbit getrennt ist, dadurch gekennzeichnet, daß es auf der Empfangsseite darin besteht, den Wert jedes empfangenen Bits modulo der Anzahl der im Rahmen enthaltenen Bits mit den vermuteten Werten der Synchronisationsbits zu vergleichen (4), die Ergebnisse der an jedem Bit durchgeführten Vergleiche zu akkumulieren ($9_1$ bis $9_L$) und in den empfangenen Bits die Bitpositionen modulo der Anzahl der in einem Rahmen enthaltenen Bits zu ermitteln (3), für die die akkumulierten Werte größer als ein einstellbarer Schwellwert (S) modulo der Anzahl der in einem Rahmen enthaltenen Bits ist, und zwar abhängig von der Anzahl der bereits für jedes Bit eines Rahmens durchgeführten Vergleiche und angepaßt in Abhängigkeit an die Wahrscheinlichkeiten eines Fehlalarms und einer Nichterkennung, die die Übertragungsstrecke charakterisiert.

**2.** Verfahren nach Anspruch 1, dadurch gekennzeichnet, daß die Bitpositionen, die in der Folge der empfangenen Bits ermittelt wurden, gespeichert werden (3), um nach ihrer relativen Adresse (5, 6) die Reihenfolge der synchronisierten Kanäle zu bestimmen.

**3.** Verfahren nach den Ansprüchen 1 und 2, dadurch gekennzeichnet, daß die Akkumulierungen bis zu einer Höchstzahl entsprechend einer Rahmenzahl $N_{max}$ durchgeführt werden, jenseits der man sicher sein kann, wenn keine Akkumulierung den Schwellwert überschritten hat, daß die analysierten Rahmen nicht synchronisiert sind.

**4.** Verfahren nach einem beliebigen der Ansprüche 1 bis 3, dadurch gekennzeichnet, daß die vermuteten Werte der Synchronisationsbits einen der beiden Binärwerte "1" oder "0" haben können und daß die Akkumulierungen gleichzeitig beim Auftreten eines Zustands (Bit 1) und des Gegenzustands (Bit 0) erfolgen, um das Vorliegen von Inversionen in den Synchronisationsbits zu erkennen.

5. Verfahren nach einem beliebigen der Ansprüche 1 bis 4, dadurch gekennzeichnet, daß die Synchronisationsbits auf der Sendeseite gemäß einer Folge von Pseudozufallsbits erzeugt werden.

6. Verfahren nach einem beliebigen der Ansprüche 1 bis 5, dadurch gekennzeichnet, daß es zur Ermittlung des vermuteten Werts eines Synchronisationsbits darin besteht, die bereits empfangenen Synchronisationsbits mit dem Erzeugungspolynom zu multiplizieren, das auf der Sendeseite zu ihrer Erzeugung gedient hat.

7. Verfahren nach einem beliebigen der Ansprüche 1 bis 6, dadurch gekennzeichnet, daß es darin besteht, die Fehler in den empfangene Synchronisationsbits zu korrigieren, indem jedem empfangenen Synchronisationsbit ein seine Qualität (19, 23, 25) ausdrückendes Bit zugeordnet wird, und indem der erwartete Wert jedes Synchronisationsbits mit Hilfe eines durch die Qualität der empfangenen Bits gewichteten Mehrheitsvotums berechnet wird (20, 21, 23, 31, 32).

8. Verfahren nach einem beliebigen der Ansprüche 1 bis 7, dadurch gekennzeichnet, daß es darin besteht, Änderungen in der Folge der Synchronisationsbits bewußt hervorzurufen, um zusätzliche Nachrichten zu übertragen.

9. Verfahren nach einem beliebigen der Ansprüche 1 bis 8, dadurch gekennzeichnet, daß es darin besteht, die Übertragungsfehlerrate zu bestimmen, indem die Fehlerrate der Synchronisationsbits gemessen wird.

10. Verfahren nach einem beliebigen der Ansprüche 1 bis 9, dadurch gekennzeichnet, daß es darin besteht, in jedem Augenblick durch Korrelationen mit den empfangene Bits zu entscheiden, ob die Synchronisation unverändert aufrechterhalten werden soll oder nur der Teil geändert werden soll, der auf der Sendeseite verändert ist.

11. Vorrichtung zur Akquisition von Synchronisationsbits in Systemen zur Übertragung von Daten, die zwischen mindestens einem Sender und einem Empfänger übertragen werden, zur Durchführung des Verfahrens nach einem beliebigen der Ansprüche 1 bis 10, dadurch gekennzeichnet, daß im Empfänger vorgesehen sind:
- ein erstes und ein zweites Entscheidungsorgan (1), die an einen Entscheidungsschwellenspeicher (2) und einen Bitpositionsspeicher (3) gekoppelt sind,
- ein erster Komparator (4), um den Zustand jedes empfangenen Bits eines Rahmens mit dem erwarteten Wert des Synchronisationsbits zu vergleichen,
- ein Rahmenzähler (5), um den Entscheidungsschwellenspeicher (2) abhängig von der Anzahl der analysierten Rahmen zu adressieren,
- und ein Bitzähler (6).

12. Vorrichtung nach Anspruch 11, dadurch gekennzeichnet, daß das erste und das zweite Entscheidungsorgan (1) aufweisen:
- einen Multiplexer (8) mit L Ausgängen, die je an einen Akkumulator ($9_1$ bis $9_L$) gekoppelt sind, während ein Eingang des Multiplexers an einen ersten Ausgang des ersten Komparators (4) angeschlossen ist, um den Zustand jedes empfangenen Bits eines Rahmens zu vergleichen, wobei die Ausgänge jedes Akkumulators ($9_1$ bis $9_L$) je an einen ersten Eingang von zweiten Komparatoren ($10_1$ bis $10_L$) angeschlossen sind, deren zweite Eingänge mit einem Datenausgang des Entscheidungsschwellenspeichers (2) verbunden sind,
- einen logischen ODER-Kreis (11), der mit seinen Eingängen an die Ausgänge der zweiten Komparatoren und mit seinem Ausgang an einen Schalteingang des Bitpositionsspeichers (3) angeschlossen ist.

13. Vorrichtung nach Anspruch 11, dadurch gekennzeichnet, daß die ersten und zweiten Entscheidungsorgane sowie der Rahmenzähler (5) und der Bitzähler (6) durch Schaltkreise eines Mikroprozessors gebildet sind.

14. Vorrichtung nach einem beliebigen der Ansprüche 11 bis 13, dadurch gekennzeichnet, daß der Empfänger ein Funkempfänger ist.

# FIG_1

| SY | MESSAGE | | | | | | | | |
|----|---|---|---|---|---|---|---|---|---|
| 0 | 1 | 2 | 3 | 4 | | | | L-2 | L-1 |

# FIG_2

| S_L | MESSAGE #1 | S_{L-1} | MESSAGE #2 | S_{L+2} | | S_N | MESSAGE #N |
|---|---|---|---|---|---|---|---|

# FIG_5-A

| SY₁ | 23 | 11 | 24 | 12 | SY₂ | 13 | 21 | 14 | 22 | SY₁ | 23 | 11 | 24 | 12 | SY₂ |

# FIG_5-B

VOIE 2

| Bit22 | Bit 23 | Bit 24 | Synchro | Bit 21 | Bit 22 | Bit 23 | Bit 24 | Synchro |

# FIG_5-C

VOIE 1

| Synchro | Bit 11 | Bit 12 | Bit 13 | Bit 14 | Synchro | Bit 11 | Bit 12 |

FIG_3

FIG_4

FIG_6

FIG_7

## FIG_8

## FIG_9